# FASCICULE DE BREVET EUROPEEN

(11) **EP 0 554 173 B1**
(45) Date de publication et mention de la délivrance du brevet: **05.06.1996**
(21) Numéro de dépôt: 93400202.3
(22) Date de dépôt: 28.01.1993
(51) Int. Cl.: C08K 7/14, C08J 5/08, C03C 25/02

(54) **Procédé d'obtention d'un produit composite par moulage**
Formverfahren zur Herstellung eines Verbundwerkstoffproduktes
Process for obtaining a composite product by moulding

(30) Priorité: 30.01.1992 FR 9200996
(43) Date de publication de la demande: 04.08.1993
(73) Titulaire: VETROTEX FRANCE S.A., F-73000 Chambéry (FR)
(72) Inventeur: Gonthier, Michel, F-73000 Jacob Bellecombette, Chambery (FR); Avena, Anne, F-74600 Seynod (FR); Bain, Jean-Marc, F-73000 Barberaz, Chamberty (FR)
(74) Mandataire: Muller, René

(56) Documents cités:
- EP-A- 0 162 421
- US-A- 4 536 446
- US-A- 4 637 956
- GLASS SCIENCE AND TECHNOLOGY 6, Amsterdam 1983, LOEWENSTEIN, "The Manufacturing Technology of Continuous Glass Fibres"

## Description

L'invention concerne les procédés de moulage de produits composites comprenant essentiellement d'une part des résines thermodurcissables et d'autre part des fils de renfort notamment en verre.

Les techniques de moulage types de résines thermodurcissables renforcées consistent à faire subir l'action conjuguée de la pression et de la chaleur à la résine associée sous forme pâteuse au renfort, à l'intérieur d'un moule puis de lui faire opérer sa réticulation, ce qui la durcit en lui donnant la forme du moule de manière définitive.

Il reste ensuite à éjecter dudit moule la pièce composite ainsi formée. On peut distinguer diverses techniques, liées notamment au dispositif d'alimentation du moule et au fonctionnement de celui-ci.

Dans le cas du moulage par compression, le système d'alimentation est du type piston, et le moule est constitué de deux demi-moules, l'un venant, par translation verticale, emboutir le second où se trouve la résine et le renfort.

Dans le cas du moulage par injection, on utilise des dispositifs de moulage fondés sur le même principe que ceux employés pour le moulage des thermoplastiques, mais adaptés aux thermodurcissables : on introduit la résine associée au renfort dans un cylindre muni d'une vis d'Archimède, la matière étant ensuite injectée dans des proportions définies dans le moule, qui s'ouvre ensuite en deux parties afin d'éjecter la pièce.

Dans chacune de ces techniques, tous les efforts de l'industrie tendent à diminuer le temps de cycle du moulage, de l'ordre de la minute dorénavant, depuis l'introduction dans le système d'alimentation du moule jusqu'à l'éjection du composite final. Mais on cherche également à optimiser les étapes de fabrication et de mise en oeuvre des constituants de départ, qui précèdent le moulage à proprement dit, notamment l'étape dite de malaxage consistant à incorporer le renfort à la résine, et ceci sans que la qualité du composite s'en trouve affectée.

Celui-ci doit en effet allier propriétés mécaniques et esthétiques, de manière parfaitement reproductible ; et c'est le rôle du renfort de fils de verre de conférer des propriétés mécaniques au matériau composite, et notamment ses caractéristiques mécaniques en flexion et/ou face au choc.

En outre, l'aspect extérieur de la pièce doit éviter des défauts tels que des problèmes de planéité, de bavures, de fibres visibles, ou des problèmes dimensionnels dûs par exemple à un remplissage imparfait du moule dans le cas de la technique par injection, ou à un phénomène de "retrait" trop accentué.

Toutes ces exigences conduisent notamment à chercher à obtenir une répartition optimale entre renfort et résine.

De manière connue, toute opération de moulage est précédée par la préparation de ce que l'on qualifiera ultérieurement de pâte d'imprégnation, c'est-à-dire le mélange desdites résines thermodurcissables, comme les polyesters insaturés, avec les additifs habituels, tels que par exemple des charges, un catalyseur, un stabilisant, un agent de démoulage.

D'autre part comme décrit dans le document US-A-4637956 et le préambule de la revendication 1, le renfort de fils provient de la coupe d'un ou plusieurs fils de base formés chacun d'une multiplicité de filaments continus. Ces filaments sont obtenus par étirage mécanique du verre fondu s'écoulant d'une multiplicité d'orifices disposés à la base d'une filière généralement chauffée par effet Joule. Ces filaments sont ensimés, rassemblés sans torsion en au moins un fil avant d'être bobinés sous forme d'un enroulement sur un support en rotation.

Une pelote peut être obtenue en dévidant simultanément plusieurs enroulements, puis en rassemblant et en bobinant sur un support en rotation une série de fils de base assemblés en parallèle sous forme de mèche.

Cette mèche est alors qualifiée de "stratifil assemblé », mèche ensuite coupée en tronçons de longueur variable.

Il reste ensuite à incorporer au sein de la pâte d'imprégnation précédemment définie le renfort sous forme de ces tronçons de stratifil assemblé, afin de fabriquer ce que l'on désigne sous le terme de « pré-imprégné ». Cette opération se déroule dans un malaxeur, de manière connue du spécialiste, soit par voie humide, soit par voie sèche. Ensuite, on laisse « mûrir » ce pré-imprégné pendant un laps de temps donné avant de pouvoir l'utiliser pour alimenter les moules.

On obtient ainsi des produits composites dont la qualité peut être jugée globalement satisfaisante. Tant de paramètres entrent en jeu que le spécialiste peut optimiser la caractéristique mécanique et/ou esthétique plus particulièrement recherchée.

Cependant, il demeure que la phase de fabrication de ces mèches de stratifil assemblé se décompose en plusieurs étapes, de manière discontinue, et impose des manipulations comme l'étape de dévidage-rembobinage, manipulations qui nécessitent à la fois du temps et de l'espace. Il faut ainsi prévoir des lieux de stockage, et du matériel adéquat pour procéder au bobinage.

L'invention a alors pour but de proposer un mode d'obtention de produits composites par moulage à partir de résines thermodurcissables renforcées, dont la mise en oeuvre soit plus rapide et/ou plus simple, sans altérer ou même éventuellement en améliorant la qualité desdits produits composites.

L'invention est un procédé de moulage par compression ou injection, d'un produit composite à partir d'une pâte d'imprégnation à base de résine(s) thermodurcissable(s) et d'un renfort de fils de verre, consistant à alimenter les moules avec un pré-imprégné incorporant à ladite pâte d'imprégnation le renfort sous forme de stratifil direct de masse linéique comprise entre 1200 et 4800 tex obtenu directement sous filière à partir d'une multitude de filaments, bobiné, puis coupé à une longueur comprise entre 10 et 25 mm. Son ensimage comprend un agent collant à base de polyuréthane(s).

Ce stratifil direct n'est pas constitué comme le stratifil assemblé qui se présente sous la forme d'une mèche obtenue par la réunion de plusieurs fils, chaque fil étant constitué par l'association de filaments étirés mécaniquement sous filière. Au contraire, le stratifil direct est fait d'une mèche d'un titre équivalent à celui d'un stratifil assemblé, mais obtenue directement sous filière à partir d'une multitude de filaments, avant d'être bobinée sur un support en rotation.

En utilisant le stratifil direct comme renfort pour des résines thermodurcissables, alors que jusque-là il était essentiellement employé dans le cadre de procédés par enroulement pour faire des tuyauteries notamment, on supprime toutes les étapes intermédiaires imposées par le stratifil assemblé, c'est-à-dire la formation de "gâteaux" àe fils sous filière, qu'il faut conjointement dévider puis rembobiner en mèches. En conséquence, on obtient, sur le plan Industriel, un gain en terme de temps, de main-d'oeuvre, de matériel, d'aire de stockage et donc de coût, qui est très sensible.

Cependant cette substitution d'un type de renfort par un autre est loin d'avoir été immédiate, dans la mesure où les forces de cohésion des mèches de stratifil assemblé sont certainement très différentes de celles des mèches de stratifil direct. C'est pourquoi le choix de l'ensimage du stratifil direct selon l'invention, à base de polyuréthane, s'est révélé primordial pour que ce renfort n'affecte pas tout le processus d'obtention des produits composites voulus.

En effet, en choisissant le renfort sous forme de stratifil assemblé, l'homme de l'art avait établi une sorte de compromis, le renfort devant répondre à des critères a priori relativement contradictoires :

Tout d'abord le renfort étant incorporé à la pâte d'imprégnation sous forme de tronçons, la constitution de la mèche de stratifil doit être telle que lors de sa coupe, l'apparition de filaments isolés, qui se chargent électrostatiquement et encrassent l'appareil de coupe, soit la plus limitée possible. Les mèches de stratifil assemblé, du fait qu'elles sont faites de fils possédant leur cohésion propre et de faible encombrement pris un à un, répondent bien à ce critère.

Ensuite les tronçons obtenus sont malaxés avec la pâte d'imprégnation et, lors de cette étape, le renfort doit se disperser de manière optimale. Là encore le stratifil assemblé répond de façon satisfaisante à cette exigence. En effet, les fils n'ont aucune cohésion entre eux au sein de la mèche et ils se séparent à l'issue de l'opération de coupe. Cette première division prépare et favorise la dispersion ultérieure du renfort au sein de la résine sous forme de filaments. C'est dire combien la présentation du renfort dans la mèche et l'ensimage utilisé jouent un rôle primordial pour concilier des exigences contradictoires. Le stratifil assemblé répondant le mieux à ces exigences, l'homme de l'art, malgré les inconvénients que ce produit présente par ailleurs, s'est attaché à améliorer l'ensimage des fils qui le constituent.

Cette attitude se comprend d'autant mieux que, substituer à du stratifil assemblé du stratifil direct laissait présager, pour le spécialiste, de nombreux problèmes. Ainsi, lors de la coupe, les mèches de stratifil direct, n'étant pas constituées de "sous-unités" de fils, n'avaient pas de comportement prévisible, et tout laissait à penser que les mèches, en forme de ruban, seraient beaucoup plus difficiles à couper, car d'une plus grande compacité, avec le risque qu'elles s'ouvrent sous l'outil de coupe de manière incontrôlée, entraînant "bourre" et encrassement.

En outre, lors du malaxage, là encore, le spécialiste pouvait redouter à juste titre que les mèches coupées de stratifil direct se dispersent dans la pâte d'imprégnation de façon hétérogène, notamment en s'ouvrant en agglomérats de filaments de tailles différentes, ce qui conduirait à des performances mécaniques des produits composites moins bonnes et même à des étapes de malaxage- beaucoup plus - longues ou plus énergiques, risquant alors dédétériorer les mèches.

Et pourtant, de manière particulièrement inattendue, utiliser un stratifil direct en combinaison avec un ensimage spécifique, dont l'agent collant est du(des) polyuréthane(s) éventuellement associé à un(ou des) polyépoxyde(s), permet tout à la fois de conserver une bonne intégrité lors de la coupe et d'obtenir une dispersion régulière et une répartition bien homogène dont font foi les bonnes performances mécaniques des composites moulés obtenus. L'ensimage comporte en outre avantageusement des composés chimiques tels qu'un agent de pontage type silane, des agents anti-statiques tels que des sels d'ammonium quaternaire et des mélanges lubrifiants tensio-actifs tel qu'un alkylpolyalkoxyéther-ester gras.

Le procédé selon l'invention peut être mis en oeuvre selon différentes manières. Le stratifil direct est préalablement découpé à des longueurs variant notamment entre 4,5 et 50 mm, de préférence entre 10 et 25 mm, et notamment de 13 mm. Sa masse linéique ou titre est comprise entre 300 et 4800 tex, de préférence entre 1000 et 2500 tex, notamment de 1200 et/ou 2400 tex. De même, le diamètre moyen des filaments unitaires dont il est constitué peut varier entre 10 et 24 micromètres, il est de préférence compris entre 14 et 20 micromètres, notamment d'environ 17 micromètres. Ces données sont bien sûr adaptables en fonction des organes de fibrage dont on dispose industriellement.

La proportion finale d'ensimage par rapport au verre du renfort est comprise entre 0,4 et 1,21%, et de préférence d'environ 0,7 % en poids, mesurée par perte au feu.

La proportion massique dans le pré-imprégné du renfort par rapport à la pâte d'imprégnation est avantageusement comprise entre 10 et 40 %, de préférence entre 15 et 25 % et notamment d'environ 18 %.

Toute résine thermodurcissable usuelle peut être utilisée pour former la pâte d'imprégnation, elle est notamment à base de polyesters insaturés.

D'autres détails et caractéristiques avantageuses de l'invention ressortent de la description ci-après de deux modes de réalisation préférés, l'un utilisant une technique de moulage par compression, et l'autre une technique de moulage par injection.

Dans les deux cas, l'application visée est la fabrication de pièces moulées pour carrosserie de voitures, notamment par exemple des pièces de hayon arrière. C'est pourquoi on adopte, comme pâte d'imprégnation, une pâte à retrait de polymérisation quasiment nul, usuellement désignée sous le terme "low profile", contenant de manière connue diverses charges et additifs ainsi qu'une résine thermodurcissable type polyester insaturé.

Son renfort de fils de verre provient de fils de stratifil direct de 1200 tex constitués à partir de filaments de 17 micromètres de diamètre puis coupés en tronçons d'environ 13 mm. L'ensimage de ces fils est utilisé dans une proportion massique par rapport aux fils de verre d'environ 0,7 % mesurée par perte au feu. Il comporte quatre constituants, dont on exprime dans le tableau ci-dessous la proportion en pourcentage massique en sec de l'ensimage : l'agent collant est un polyuréthane, vendu par la société Bayer sous la dénomination commerciale PU 401. On utilise également un amino-silane vendu par la société Union Carbide sous la dénomination commerciale Silane A 1100, un sel d'ammonium quaternaire vendu par la société Emery sous la dénomination Emerstat 6660, un mélange d'alkyl-polyalkoxyéther-ester vendu par la société Diamond Shamrock sous la dénomination commerciale Nopcostat FT 504.

| | |
|---|---|
| PU 401 | 4,70 % |
| Silane A 1100 | 0,38 % |
| Emerstat 6600 | 0,15 % |
| Nopcostat FT 504 | 1,0 % |

Puis la pâte d'imprégnation et ledit renfort sont introduits dans un malaxeur turbulent à arbre central dans une proportion massique de 18 % de renfort et 82 % de composition de résines, afin d'obtenir un mélange bien homogène. Cette étape dure pendant une période de quelques minutes pour une masse totale finale du pré-mélange de l'ordre de 20 kilogrammes, et se fait par voie humide.

On laisse ensuite reposer le pré-mélange A ainsi constitué pendant environ 7 jours.

Une comparaison est effectuée à l'aide d'un pré-mélange 3 contenant une pâte d'imprégnation identique mais dans laquelle ont été incorporées des mèches de renfort constituées, de manière connue, de stratifil assemblé de 2400 tex contenant des filaments de 14 micromètres de diamètre. Leur ensimage contient, comme agent collant, une résine associant un polyuréthane et un époxyde.

On précise dès à présent que deux types de tests mécaniques sont effectués sur les pièces moulées avec ces pré-imprégnés : les tests de flexion en trois points d'après la norme ISO 178 et le test de choc Charpy d'après la norme ISO 179.

On précise que le module et la contrainte en rupture en flexion sont exprimés en mégapascals (MPa), l'allongement à la rupture en pourcentage (%) et le choc Charpy en joule par centimètres cube (J/cm³).

Le premier mode de réalisation concerne un procédé de moulage par compression dans un moule de disque de diamètre 180 millimètres et d'épaisseur 3 millimètres, à une température de moulage de 165°C sous une pression de 50 bars, soit 5.10⁶ Pa.

On moule ainsi des pièces A et 3 à partir des prémélanges A et B, desquelles on extrait des éprouvettes dans deux directions principales. Les caractéristiques de flexion et de choc Charpy indiquées dans le tableau ci-dessous sont une moyenne des caractéristiques obtenues pour ces deux types d'éprouvettes longitudinales et transversales :

| flexion | | | | choc Charpy |
|---|---|---|---|---|
| module (flexion) | | contrainte rupture | allongement rupture | |
| A | 13773 ± 588 | 134 ± 19 | 1,97 ± 0,26 | 1,35 ± 0,42 |
| B | 13630 ± 520 | 150 ± 31 | 1,94 ± 0,30 | 1,22 ± 0,32 |

On constate que ce pré-mélange A selon l'invention permet d'obtenir des pièces moulées dont les caractéristiques mécaniques moyennes sont tout à fait similaires à celles des pièces obtenues avec le pré-imprégné B comparatif, et même un peu meilleures si l'on compare les valeurs de contrainte à la rupture et de résistance au choc Charpy, à ceci près que le renfort de stratifil direct du pré-imprégné A a été fabriqué beaucoup plus aisément que le renfort de stratifil assemblé utilisé dans le pré-imprégné B, ce qui constitue un gain de temps et de coût important.

Ce tableau met également en évidence que les caractéristiques mécaniques des éprouvettes prélevées selon deux directions principales sur les pièces A et B présentent non seulement des valeurs moyennes similaires, mais également des "fourchettes" autour de ces valeurs moyennes de même ordre de grandeur. Ceci tend à prouver que les deux types de renfort présentent une répartition homogène équivalente dans les pâtes d'imprégnation, avec des orientations tout à fait similaires, alors que l'on aurait pu s'attendre à ce que le renfort de stratifil direct se comporte très différemment, se répartisse de manière plus hétérogène et en conséquence affecte les propriétés mécaniques des pièces composites A.

Le second mode de réalisation concerne un procédé de moulage par injection des deux mêmes pré-imprégnés A et B. L'injection s'effectue par une alimentation d'un tube chauffé muni d'une vis courte. Le moulage est réalisé à 170°C dans un moule pour former des plaques planes à deux nervures de 180 sur 360 millimètres carré et d'épaisseur 3 millimètres. Des éprouvettes sont prélevées comme précédemment. On rassemble dans le tableau ci-dessous les résultats mécaniques obtenus.

| flexion | | | | choc Charpy |
|---|---|---|---|---|
| module (flexion) | | contrainte rupture | allongement rupture | |
| A | 12310 ± 966 | 89 ± 43 | 1,05 ± 0,61 | 0,74 ± 0,48 |
| B | 13097 ± 1003 | 99 ± 46 | 1,09 ± 0,57 | 0,64 ± 0,47 |

Là encore, les pièces moulées avec le pré-imprégné A selon l'invention présentent des caractéristiques similaires à celles obtenues avec le pré-imprégné B, on note même une certaine amélioration de la résistance au choc Charpy et du module et de la contrainte à la rupture en flexion, ce qui est tout à fait avantageux pour la fabrication de certaines pièces telles que des pièces de carrosserie automobile comme revendiquées dans la revendication 10.

D'autres essais ont été réalisés en injection, mais cette fois avec des moules industriels : des moules de hayon arrière de voiture automobile. Ces pièces sont actuellement très fréquemment constituées en fait de deux pièces assemblées de produits composites : une première pièce dite "de peau", qui est la pièce visible, dont l'aspect extérieur est par conséquent particulièrement privilégié, et une seconde pièce dite "de renfort" non visible une fois montée, qui permet de soutenir mécaniquement la première.

Les essais ont été effectués avec des "moules de peau", c'est-à-dire des moules pour fabriquer des pièces "de peau", dans les mêmes conditions de pression et température que précédemment avec les pré-imprégnés A et B tout d'abord avec un unique point d'injection (1), puis avec deux points d'injection (2). Après prélèvements d'éprouvettes, les résultats mécaniques sont les suivants :

| flexion | | | | choc Charpy |
|---|---|---|---|---|
| module | | contrainte rupture | allongement rupture | |
| A(1) | 10601 ± 1141 | 81 ± 32 | 1,17 ± 0,56 | 0,88 ± 0,56 |
| A(2) | 10502 ± 1159 | 79 ± 33 | 1,10 ± 0,54 | 0,80 ± 0,59 |
| B(1) | 10816 ± 1510 | 80 ± 32 | 1,03 ± 0,51 | 0,68 ± 0,44 |
| B(2) | 10788 ± 1203 | 80 ± 33 | 1,02 ± 0,51 | 0,67 ± 0,45 |

Là encore, les propriétés mécaniques des pièces fabriquées à partir des deux pré-imprégnés sont très similaires, avec une nette amélioration, cette fois, de la résistance au choc Charpy des pièces avec le pré-imprégné A selon l'invention.

En conclusion, l'invention a mis au point un nouveau type de renfort à ensimage adapté pour renforcer des thermodurcissables destinés à être moulés par injection ou compression, et ceci en surmontant tous les problèmes de mise en oeuvre auxquels l'homme du métier aurait pu s'attendre et en proposant une solution économiquement et technologiquement très intéressante.

## Revendications

1. Procédé de moulage par injection ou compression d'un produit composite à partir d'une pâte d'imprégnation à base de résine(s) thermodurcissable(s) et d'un renfort de fils de verre dont l'ensimage comporte un agent collant à base de polyuréthane(s), **caractérisé en ce qu'**on alimente les moules avec un pré-imprégné incorporant à ladite pâte d'imprégnation le renfort sous forme de stratifil direct de masse linéique comprise entre 1200 et 4800 tex, obtenu directement sous filière à partir d'une multitude de filaments, bobiné puis coupé à une longueur comprise entre 10 et 25 mm.

2. Procédé selon la revendication 1. **caractérisé en ce que** l'ensimage du renfort de stratifil direct coupé comprend un agent collant associant au(x) polyuréthane(s) un(des) polyépoxyde(s).

3. Procédé selon l'une des revendications précédentes, **caractérisé en ce que** l'ensimage du renfort de stratifil direct coupé comprend également un amino-silane, un sel organique d'ammonium quaternaire, un mélange d'alkylpolyalkoxyéther-ester.

4. Procédé selon l'une des revendications précédentes, **caractérisé en ce que** le stratifil direct est coupé à une longueur d'environ 13 mm.

5. Procédé selon l'une des revendications précédentes, **caractérisé en ce que** le stratifil direct présente une masse linéique d'environ 1200 et/ou 2400 tex.

6. Procédé selon l'une des revendications précédentes, **caractérisé en ce que** le stratifil direct est constitué de filaments de diamètre moyen compris entre 10 et 24 micromètres, notamment entre 14 et 20 micromètres et de préférence d'environ 17 micromètres.

7. Procédé selon l'une des revendications précédentes, **caractérisé en ce que** la proportion finale d'ensimage par rapport au verre du renfort est comprise entre 0,4 et 1,21%, notamment d'environ 0,7% en poids.

8. Procédé selon l'une des revendications précédentes, **caractérisé en ce que** la proportion massique du renfort par rapport à la pâte d'imprégnation est comprise entre 10 et 40%, notamment entre 15 et 25% et de préférence d'environ 18%.

9. Procédé selon l'une des revendications précédentes, **caractérisé en ce que** la résine thermoduricssable de la pâte d'imprégnation est à base de polyester(s) insaturé(s).

10. Application du procédé selon l'une des revendications précédentes au moulage de pièces composites pour carrosserie de véhicules.

## Claims

1. Method for the injection or compression moulding of a composite product from an impregnation compound based on thermosetting resin(s) and a glass-fibre reinforcement the sizing of which includes an adhesive based on polyurethane(s), characterized in that the moulds are supplied with a pre-impregnated element incorporating, in the said impregnation compound, the reinforcement in the form of direct roving with a mass per unit length of between 1200 and 4800 tex, which is produced from a plurality of filaments directly under the extrusion head, is wound and is then cut to a length of between 10 and 25 mm.

2. Method according to Claim 1,
characterized in that the sizing of the cut direct roving reinforcement includes an adhesive combining polyepoxide(s) with the polyurethane(s).

3. Method according to any one of the preceding claims, characterized in that the sizing of the cut direct roving also comprises an aminosilane, a quaternary ammonium organic salt, and an alkylpolyalkoxy ether-ester mixture.

4. Method according to any one of the preceding claims, characterized in that the direct roving is cut to a length of about 13 mm.

5. Method according to any one of the preceding claims, characterized in that the direct roving has a mass per unit length of about 1200 and/or 2400 tex.

6. Method according to any one of the preceding claims, characterized in that the direct roving is constituted by filaments with an average diameter of between 10 and 24 micrometers, particularly between 14 and 20 micrometers and preferably about 17 micrometers.

7. Method according to any one of the preceding claims, characterized in that the final proportion of sizing to reinforcement glass is between 0.4 and 1.21%, particularly about 0.7% by weight.

8. Method according to any one of the preceding claims, characterized in that the mass ratio of the reinforcement to the impregnation compound is between 10 and 40%, particularly between 15 and 25% and preferably about 18%.

9. Method according to any one of the preceding claims, characterized in that the thermosetting resin of the impregnation compound is based on unsaturated polyester(s).

10. Use of the method according to any one of the preceding claims for the moulding of composite elements for vehicle bodywork.

## Patentansprüche

1. Verfahren zur Formgebung eines Verbunderzeugnisses ausgehend von einer Imprägniermasse auf der Grundlage duroplastischen Harzes oder duroplastischer Harze und einer Verstärkung aus Glasfasern, deren Schlichte einen Klebstoff auf der Grundlage von Polyurethan/en enthält, durch Spritzgießen oder Pressen, **dadurch gekennzeichnet, daß** den Formen ein Prepreg zugeführt wird, das in der Imprägniermasse die Verstärkung in Form eines direkten Rovings mit einem Titer zwischen 1200 und 4800 tex enthält, das direkt unter der Düse aus einer Vielzahl von Filamenten erhalten, aufgespult und anschließend auf eine Länge zwischen 10 und 25 mm zugeschnitten ist.

2. Verfahren nach Anspruch 1, **dadurch gekennzeichnet, daß** die Schlichte des zugeschnittenen direkten Verstärkungsrovings einen Klebstoff enthält, in welchem Polyurethan/e mit Polyepoxid/en verbunden ist/sind.

3. Verfahren nach Anspruch 1 oder 2, **dadurch gekennzeichnet, daß** die Schlichte des zugeschnittenen direkten Verstärkungsrovings auch ein Aminosilan, ein quartäres organisches Ammoniumsalz und ein Alkylpolyalkoxyether/-ester-Gemisch enthält.

4. Verfahren nach einem der vorhergehenden Ansprüche, **dadurch gekennzeichnet, daß** das direkte Roving auf eine Länge von etwa 13 mm zugeschnitten ist.

5. Verfahren nach einem der vorhergehenden Ansprüche, **dadurch gekennzeichnet, daß** das direkte Roving einen Titer von etwa 1200 und/oder 2400 tex aufweist.

6. Verfahren nach einem der vorhergehenden Ansprüche, **dadurch gekennzeichnet, daß** das direkte Roving aus Filamenten mit einem mittleren Durchmesser zwischen 10 und 24 Mikrometern, insbesondere zwischen 14 und 20 Mikrometern und vorzugsweise von etwa 17 Mikrometern besteht.

7. Verfahren nach einem der vorhergehenden Ansprüche, **dadurch gekennzeichnet, daß** der Endanteil der Schlichte, bezogen auf das Verstärkungsglas, zwischen 0,4 und 1,21 Gew.-% und insbesondere etwa 0,7 Gew.-% beträgt.

8. Verfahren nach einem der vorhergehenden Ansprüche, **dadurch gekennzeichnet, daß** der Gewichtsanteil der Verstärkung, bezogen auf die Imprägniermasse, zwischen 10 und 40 %, insbesondere zwischen 15 und 25 % und vorzugsweise etwa 18 % beträgt.

9. Verfahren nach einem der vorhergehenden Ansprüche, **dadurch gekennzeichnet, daß** das duroplastische Harz der Imprägniermasse ungesättigte/n Polyester zur Grundlage hat.

10. Anwendung des Verfahrens nach einem der vorhergehenden Ansprüche auf die Formgebung von Verbundteilen für Fahrzeugkarosserien.
